(19) Europäisches Patentamt
European Patent Office
Office européen des brevets

(11) EP 4 693 863 A1

(12) EUROPEAN PATENT APPLICATION
published in accordance with Art. 153(4) EPC

(43) Date of publication:
11.02.2026 Bulletin 2026/07

(51) International Patent Classification (IPC):
H02M 3/155 (2006.01)    H02M 1/00 (2006.01)
H02M 1/08 (2006.01)    G09G 3/3208 (2016.01)

(21) Application number: 24807304.1

(22) Date of filing: 05.01.2024

(52) Cooperative Patent Classification (CPC):
G09G 3/3208; H02M 1/00; H02M 1/08; H02M 3/155

(86) International application number:
PCT/KR2024/000261

(87) International publication number:
WO 2024/237420 (21.11.2024 Gazette 2024/47)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 12.05.2023 KR 20230061811
30.08.2023 KR 20230114628

(71) Applicant: Samsung Electronics Co., Ltd.
Suwon-si, Gyeonggi-do 16677 (KR)

(72) Inventors:
• PARK, Minsu
  Suwon-si, Gyeonggi-do 16677 (KR)
• NOH, Seungduck
  Suwon-si, Gyeonggi-do 16677 (KR)
• YUN, Chuleun
  Suwon-si, Gyeonggi-do 16677 (KR)

(74) Representative: Nederlandsch Octrooibureau
P.O. Box 29720
2502 LS The Hague (NL)

(54) **POWER SUPPLY DEVICE FOR SUPPLYING POWER TO DISPLAY AND CONTROL METHOD THEREOF**

(57) Disclosed are a power supply device for providing power to a display and a control method thereof. The power supply device may comprise: a driver unit including an inductor; a frequency compensation unit; and a control unit including a current slope compensation unit. The control unit outputs a synchronous mode control signal for operating the driver unit in a synchronous mode, on the basis of a first frequency configured according to a first duty ratio. When a preconfigured condition is satisfied, the control unit outputs an asynchronous mode control signal for causing operation by switching the synchronous mode to an asynchronous mode. When the mode is switched to the asynchronous mode, the frequency compensation unit outputs a second frequency to which a frequency compensation value has been applied. The current slope compensation unit outputs a second current signal corresponding to an inductor current to which the second frequency and a slope compensation value configured on the basis of a second duty ratio of the asynchronous mode have been applied. The control unit outputs a switching signal for switching the driver unit on the basis of the second frequency and the second current signal.

FIG. 2

**Description**

[Technical Field]

Various embodiments of this document relate to a power supply device for supplying power to a display and a control method thereof.

[Background Art]

An electronic device may include a display. The display may be implemented in various types, such as a liquid crystal display (LCD) or an organic light emitting diode (OLED).

For example, an OLED may be one of LED semiconductor devices composed of an organic compound layer. Unlike the LCD, the OLED does not require a backlight, and may be designed to be lightweight and provide clear readability even outdoors, since the OLED emits light on its own when being applied with electricity. In addition, since the OLED emits light on its own when being applied with electricity, the OLED may have higher efficiency of power consumption compared to the LCD.

A power supply device for supplying power to a display may include a low dropout (LDO) and a DC-DC converter. The DC-DC converter may include a boost converter, a buck converter, or a buck-boost converter. The boost converter may boost a DC input voltage to provide power to the display. The buck converter may buck a DC input voltage to provide power to the display. The buck-boost converter may boost or buck the DC input voltage to provide power to the display.

The above-described information may be provided as related art for the purpose of assisting in understanding the present disclosure. No claim or determination is made as to whether any of the above-described contents is applicable as prior art related to the present disclosure.

[Disclosure of Invention]

[Technical Problem]

This document is directed to providing a power supply device that stably switches a mode of a power supply device, and a control method thereof.

[Solution to Problem]

According to various embodiments of this document, a power supply device may include a driver unit including an inductor, a frequency compensation unit, and a control unit including a current slope compensation unit. The control unit may output a synchronous mode control signal for operating the driver unit in a synchronous mode, based on a first frequency configured according to a first duty ratio. When a preconfigured condition is satisfied, the control unit may output an asynchronous mode control signal for switching the synchronous mode to an asynchronous mode. When the synchronous mode is switched to the asynchronous mode, the frequency compensation unit may output a second frequency to which a frequency compensation value is applied. The current slope compensation unit may output a second current signal corresponding to a current of the inductor to which a slope compensation value configured based on the second frequency and a second duty ratio in the asynchronous mode is applied. The control unit may output a switching signal for switching the driver unit based on the second frequency and the second current signal.

According to various embodiments of this document, a control method of a power supply device may include switching to a synchronous mode based on a first frequency configured according to a first duty ratio. When a preconfigured condition is satisfied, the control method may include switching the synchronous mode to an asynchronous mode. When the synchronous mode is switched to the asynchronous mode, the control method may include outputting a second frequency to which a frequency compensation value is applied. The control method may include outputting a second current signal corresponding to a current of an inductor to which a slope compensation value configured based on the second frequency and a second duty ratio in the asynchronous mode is applied. The control method may include switching based on the second frequency and the second current signal.

[Advantageous Effects of Invention]

According to various embodiments of this document, it is possible to stably switch a mode of a power supply device.

The effects of the present disclosure are not limited to the above-described effects, and other effects that are not mentioned may be obviously understood by those skilled in the art from the following description.

[Brief Description of Drawings]

FIG. 1 is a block diagram of an electronic device in a network environment according to various embodiments.
FIG. 2 is a circuit diagram of a power supply device that provides power to the electronic device according to various embodiments.
FIG. 3 is a diagram for describing a method for compensating for a frequency according to various embodiments.
FIG. 4 is a diagram for describing a method for compensating for a current slope according to various embodiments.
FIGS. 5A and 5B are diagrams illustrating output voltages according to various embodiments.
FIG. 6 is a diagram illustrating a slope compensation value and an output voltage ripple according to various embodiments.
FIG. 7 is a diagram illustrating a load condition and an output voltage ripple according to various embodiments.
FIG. 8 is a diagram illustrating a load condition, the slope compensation value, and the output voltage ripple according to various embodiments.
FIG. 9 is a flowchart for describing a control method of a power supply device according to various embodiments.

[Mode for the Invention]

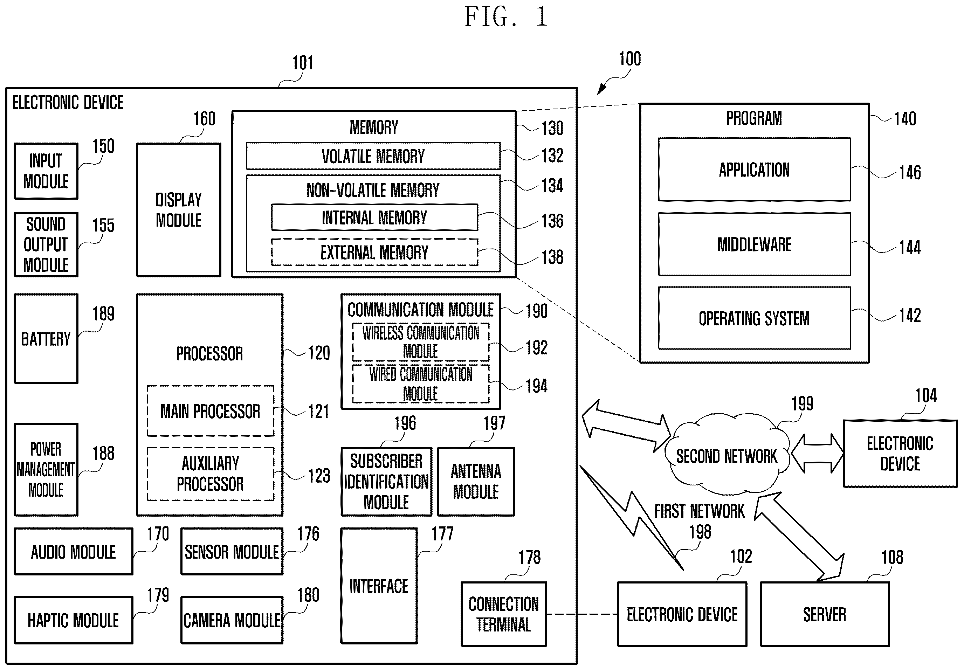

Hereinafter, various embodiments of the present disclosure will be described with reference to the accompanying drawings. FIG. 1 is a block diagram illustrating an electronic device 101 in a network environment 100 according to various examples.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an example, the electronic device 101 may communicate with the electronic device 104 via the server 108. According to an example, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some examples, at least one of the components (e.g., the connection terminal 178) may be omitted from the electronic device 101, or one or more other components may be added in the electronic device 101. In some examples, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one example, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an example, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an example, the auxiliary processor 123 (e.g., an image signal processor or a communication processor) may be implemented as part of another component (e.g., the camera module 180 or the communication module 190) functionally related to the auxiliary processor 123. According to an example, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory may include at least one of an internal memory 136 and an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an example, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an example, the display module 160 may include a touch sensor adapted to detect a touch, or a pressure sensor adapted to measure the intensity of force incurred by the touch.

The audio module 170 may convert a sound into an electrical signal and vice versa. According to an example, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an example, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an example, the interface 177 may include, for example, a high definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an example, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an example, the haptic module 179 may include, for example, a motor, a piezoelectric element, or an electric stimulator.

The camera module 180 may capture a still image or moving images. According to an example, the camera module 180 may include one or more lenses, image sensors, image signal processors, or flashes.

The power management module 188 may manage power supplied to the electronic device 101. According to one example, the power management module 188 may be implemented as at least part of, for example, a power management integrated circuit (PMIC).

The battery 189 may supply power to at least one component of the electronic device 101. According to an example, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an example, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an example, the wireless communication module 192 may support a peak data rate (e.g., 20 gigabits per second (Gbps) or more) for implementing eMBB, loss coverage (e.g., 164 decibels (dB) or less) for implementing mMTC, or U-plane latency (e.g., 0.5 milliseconds (ms) or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an example, the antenna module 197 may include an antenna including a radiating element composed of a conductive material or a conductive pattern formed in or on a substrate (e.g., a printed circuit board (PCB)). According to an example, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an example, another component (e.g., a radio frequency integrated circuit (RFIC)) other than the radiating element may be additionally formed as part of the antenna module 197.

According to various examples, the antenna module 197 may form an mmWave antenna module. According to an example, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an example, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an example, all or some of operations to be executed at the electronic device 101 may be executed at one or more of the external electronic devices (e.g. electronic devices 102 and 104 or the server 108). For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an example, the external electronic device 104 may include an internet-of-things (IoT) device. The server 108 may be an intelligent server using machine learning and/or a neural network. According to an example, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various examples may be one of various types of electronic devices. The electronic devices may include, for example, a portable communication device (e.g., a smartphone), a computer device, a portable multimedia device, a portable medical device, a camera, a wearable device, or a home appliance. According to an example of the disclosure, the electronic devices are not limited to those described above.

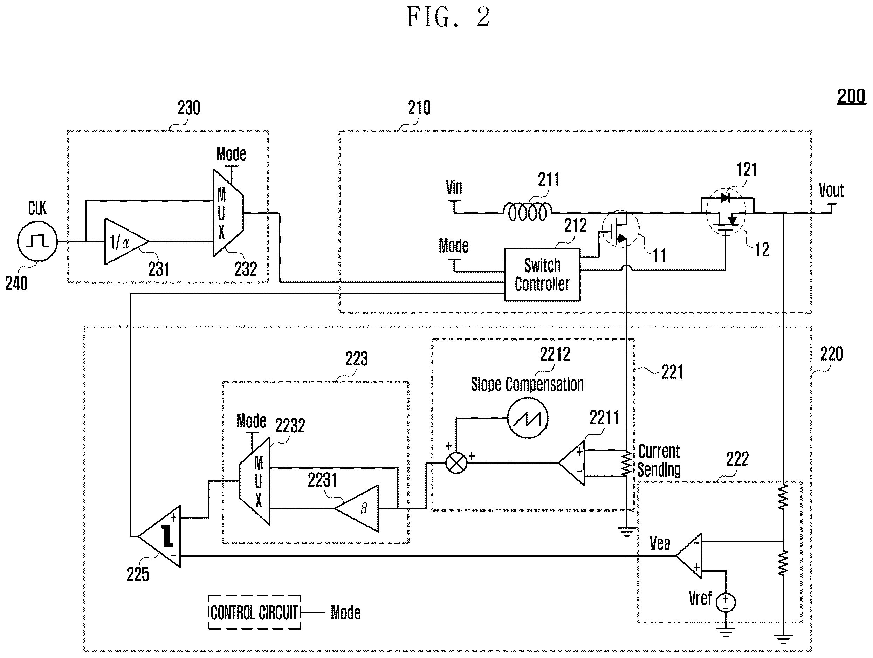

FIG. 2 is a circuit diagram of a power supply device that provides power to the electronic device according to various embodiments.

Referring to FIG. 2, a power supply device 200 may include a driver unit 210, a control unit 220, a frequency compensation unit 230, and a clock unit 240. For example, the power supply device 200 may be a boost converter.

As illustrated in FIG. 2, in an embodiment, the driver unit 210 may include an inductor 211, a switch controller 212, a first switch 11, and a second switch 12. The second switch 12 may include a bypass diode 121. For example, the bypass diode 121 may be implemented in the form of a body diode of a transistor forming a switch, or may be implemented as a separate diode element. One terminal of the inductor 211 may be connected to a voltage input terminal, and the other terminal may be connected to one terminal of the first switch 11 and one terminal of the second switch 12. The inductor 211 may increase a current of the inductor 211 for a first period of time and output the current of the inductor 211 for a second period of time by turning on/off the first switch 11 and/or the second switch 12. Since the current is a differentiation of a charge, the inductor 211 may charge the charge for the first period of time (e.g., a charging cycle) and output the charge for the second period of time (e.g., a discharging cycle). The switch controller 212 may receive a mode signal and a clock signal. In addition, the switch controller 212 may receive a comparison signal that compares the current of the inductor with an error value. The switch controller 212 may turn on/off a first switch 11 and/or a second switch 12 based on an input signal. The first switch 11 may be connected to the inductor 211 and the current detection unit 2211 of the control unit 220. The second switch 12 may be connected in parallel between the inductor 211 and a voltage output terminal.

The control unit 220 may include a current signal output unit 221, an error output unit 222, a current slope compensation unit 223, and a comparator 225. The current signal output unit 221 may include a current detector 2211 and a slope compensator 2212. The current signal output unit 221 may be connected to the first switch 11 and the current slope compensation unit 223. The current detector 2211 may detect an instantaneous current of the inductor 211 and output a signal (detection current signal) corresponding to the detected current of the inductor 211. The slope compensator 2212 may be connected to an output terminal of the current detector 2211. The slope compensator 2212 may prevent distortion in charging/discharging timing of the inductor 211 when a duty ratio is greater than or equal to a certain duty ratio. For example, the slope compensator 2212 may compensate for the signal corresponding to the detected current with a compensation value to prevent sub-harmonic oscillation in a peak current mode. The slope compensator 2212 may compensate for the signal (detection current signal) corresponding to the detected current of the inductor 211, and the current signal output unit 221 may output the compensated detection current signal (first current signal).

An input terminal of the error output unit 222 is connected to the second switch 12 and the voltage output terminal, and the output terminal may be connected to the comparator 225. The error output unit 222 may compare an instantaneous output voltage and a target output voltage and output an error value Vea. An input terminal of the current slope compensation unit 223 is connected to the current signal output unit 221, and an output terminal may be connected to the comparator 225. An output terminal signal of the current signal output unit 221 may be a signal (first current signal) obtained by compensating for the signal corresponding to the current of the inductor 211. The current slope compensation unit 223 may include a current compensation circuit 2231 and a multiplexer 2232. In an asynchronous mode, the current compensation circuit 2231 may output a signal (second current signal) in which a slope compensation value is applied to the first current signal. The multiplexer 2232 may select a path that outputs a signal according to the mode (e.g., synchronous mode or asynchronous mode). For example, in a synchronous mode, the multiplexer 2232 may select a path without the current compensation circuit 2231 and output the first current signal. In the asynchronous mode, the multiplexer 2232 may select the path passing through the current compensation circuit 2231 and output the second current signal. An input terminal of the comparator 225 may be connected to the error output unit 222 and the current slope compensation unit 223, and an output terminal may be connected to the switch controller 212. The comparator 225 may compare the error value Vea output from the error output unit 222 with the current output from the current slope compensation unit 223 to determine the discharge timing of the inductor 211.

The frequency compensation unit 230 may be connected to the clock unit 240 and the driver unit 210. The frequency compensation unit 230 may include a frequency compensation circuit 231 and a multiplexer 232. The frequency compensation circuit 231 may output a preconfigured frequency in the asynchronous mode. The multiplexer 232 may selectively output the configured frequency according to the mode (e.g., synchronous mode or asynchronous mode). For example, in the synchronous mode, the multiplexer 232 may output a preconfigured first frequency. Alternatively, in the asynchronous mode, the multiplexer 232 may output a second frequency to which the frequency compensation value is applied.

The clock unit 240 is connected to the frequency compensation unit 230 and may provide a clock of the preconfigured frequency (e.g., first frequency) to the frequency compensation unit 230.

The control unit 220 may control the switch controller 212. For example, the control unit 220 may output a synchronous mode control signal for operating in a synchronous mode to the switch controller 212. The switch controller 212 may turn on/off the first switch 11 and/or the second switch 12 under the control of the control unit 220. As an example, when the first switch 11 is turned on and the second switch 12 is turned off, the current of the inductor 211 may be increased (or energy may be increased) by an input voltage Vin. At a certain timing, the switch controller 212 may turn off the first switch 11 and turn on the second switch 12 by the signal input to the switch controller 212. In this case, the current of the inductor 211 may be output to a voltage output terminal Vout through the second switch 12. And, the current of the inductor 211 may be decreased. The mode in which the second switch 12 is turned on and the current of the inductor 211 is output through the second switch 12 may be referred to as the synchronous mode.

As an example, the input terminal of the power supply device (e.g., boost converter) may be connected to a battery power supply, and the output terminal may be connected to a load (e.g., display) power supply. If a difference between an input voltage and an output voltage is secured (e.g., Vin - Vout < 0), when the current of the inductor 211 is output to the output terminal Vout, the current of the inductor 211 may be sufficiently decreased, so the switch controller 212 may turn on the second switch 12.

However, when the input voltage is increased and the difference between the input voltage and the output voltage is not large, the current of the inductor 211 may not be sufficiently decreased when the inductor 211 is discharged. In this case, the control unit 220 may output an asynchronous mode control signal for operating in the asynchronous mode to the switch controller 212. The switch controller 212 may turn off the first switch 11 and the second switch 12 under the control of the control unit 220, and the current of the inductor 211 may flow through a bypass diode 121 included in the second switch 12. The mode in which the current of the inductor 211 is output through the bypass diode 121 may be referred to as the asynchronous mode. For example, in the asynchronous mode, the switch controller 212 may turn on the first switch 11 and turn off the second switch 12. In this case, the current of the inductor 211 may be increased by the input voltage Vin. At the certain timing, the switch controller 212 may turn off the first switch 11 and the second switch 12 (or, maintain the off state of the second switch 12) by the signal input to the switch controller 212. In this case, the current of the inductor 211 may be output to the voltage output terminal Vout through the bypass diode 121 of the second switch 12. And, the current of the inductor 211 may be decreased.

When the current of the inductor 211 flows through the bypass diode 121, the difference between the input voltage and the output voltage may be secured by a forward voltage of the bypass diode 121. Accordingly, the asynchronous mode in which the current flows through the bypass diode 121 may sufficiently decrease the current of the inductor 211 by securing the difference between the input voltage and the output voltage.

In the synchronous mode and/or the asynchronous mode, the inductor 211 may repeatedly charge and discharge (or increase and output current) charges and output a current to the voltage output terminal. In the synchronous mode, the driver unit 210 may charge charges (or increase current) in the inductor 211 by turning on the first switch 11 and turning off the second switch 12 based on the preconfigured first duty ratio and the preconfigured first frequency. In addition, the first switch 11 may be turned off at a certain timing and the second switch 12 may be turned on to discharge the charge of the inductor 211 (or output the current). For example, the current signal output unit 221 may detect the instantaneous current of the inductor 211. The error output unit 222 may output an error value using a difference between the instantaneous output voltage and the target output voltage. The comparator 225 may compare the detected instantaneous current of the inductor 211 with the error value. The error value may be a constant value, and the instantaneous current of the inductor 211 may be increased during the charging process. When the instantaneous current of the inductor 211 becomes equal to the error value through the comparator 225, the control unit 220 may control the switch controller 212 to discharge the charge of the inductor 211 (or output the current). In the synchronous mode, the switch controller 212 may turn off the first switch 11 and turn on the second switch 12 to output the current of the inductor 211. In the synchronous mode, the switch controller 212 may repeatedly perform on/off operations of the second switch 12.

Even in the asynchronous mode, the operation may be similar to that of the synchronous mode, except that both the first switch 11 and the second switch 12 are turned off during the discharge and the current is output through the bypass diode 121. In the asynchronous mode, the switch controller 212 may maintain the second switch 12 in the off state.

When the synchronous mode is switched to the asynchronous mode, as the slope of the discharge current of the inductor 211 may be increased, the amount of current that may be sent to the output terminal is decreased (or the charge amount is decreased). In response to the decrease in the amount of current, the undershooting may occur in the output voltage until the error output unit 222 increases the error value. Similarly, when the asynchronous mode is switched to the synchronous mode, the difference in the slope of the discharge current may cause overshoot in the output voltage. The undershoot and/or overshoot occurring in the output voltage may cause noise on a display panel (e.g., OLED panel).

The power supply device 200 of this document may include the frequency compensation unit 230 and the current slope compensation unit 222 to prevent the undershoot and/or overshoot that may occur during the mode switching. The frequency compensation unit 230 and the current slope compensation unit 223 may eliminate (or minimize) the differences in the amounts of charge during the mode switching by matching the charge amount of the inductor 211 in the asynchronous mode with the charge amount of the inductor 211 in the synchronous mode.

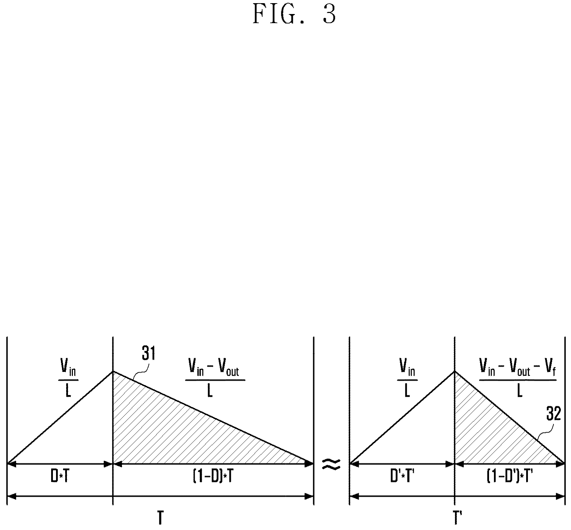

FIG. 3 is a diagram for describing a method for compensating for a frequency according to various embodiments.

Referring to FIG. 3, a current waveform of the inductor 211 in the synchronous mode and a current waveform of the inductor 211 in the asynchronous mode are illustrated. In the synchronous mode and/or the asynchronous mode, a section in which the current of the inductor 211 is increased may be a charging section, and a section in which the current of the inductor 211 is decreased may be a discharging section. Since the charge amount is a differential value of the current, the current may be integrated to obtain the charge amount (area of the current waveform).

An area 31 of the discharge section in the synchronous mode is as follows:

$$(1/2)* \{(1-D)*T\} * \{(1-D)*T*((Vin-Vout)/L)\} = (1/2)*\{(1-D)*T\}^2*((Vin-Vout)/L) = (1/2)*\{(Vin/Vout)*T\}^2*((Vin-Vout)/L)$$

Here, D may represent the duty ratio in the synchronous mode, T may represent the period in the synchronous mode, Vin may represent the input voltage, Vout may represent the output voltage, and L may represent the inductance value of the inductor 211.

An area 32 of the discharge section in the asynchronous mode is as follows:

$$(1/2)*\{(1-D')*T'\}*\{(1-D')*T'*((Vin-Vout-Vf)/L)\} = (1/2)*\{(1-D')*T'\}^2*((Vin-Vout-Vf)/L) = (1/2)*\{(Vin/(Vout+Vf))*T'\}^2*((Vin-Vout-Vf)/L)$$

Here, D' may represent the duty ratio in the asynchronous mode, T' may represent the period in the asynchronous mode, and Vf may represent the forward voltage of the bypass diode 121. D' and T' may represent values that compensate for the D and T in the synchronous mode.

Assuming that the area of the discharge section in the synchronous mode 31 and the area of the discharge section in the asynchronous mode 32 are equal, it may be expressed as follows.

$$\text{Since Vout/Vin} = 1/(1-D) \text{ and, } (Vout+Vf)/Vin = 1/(1-D'),$$

$$(1/2)* \{(Vin/Vout)*T\}^2*((Vin-Vout)/L) = (1/2)* \{(Vin/(Vout+Vf))*T'\}^2*((Vin-Vout-Vf)/L)$$

$$T'/T = ((Vout+Vf)/Vout)*Root((Vin-Vout)/(Vin-Vout-Vf))$$

If T'/T is a, then a may be the frequency compensation value.

Therefore, the frequency compensation value may be the compensation value for the frequency at which the discharge charge amount of the inductor in the synchronous mode becomes equal to the discharge charge amount of the inductor in the asynchronous mode.

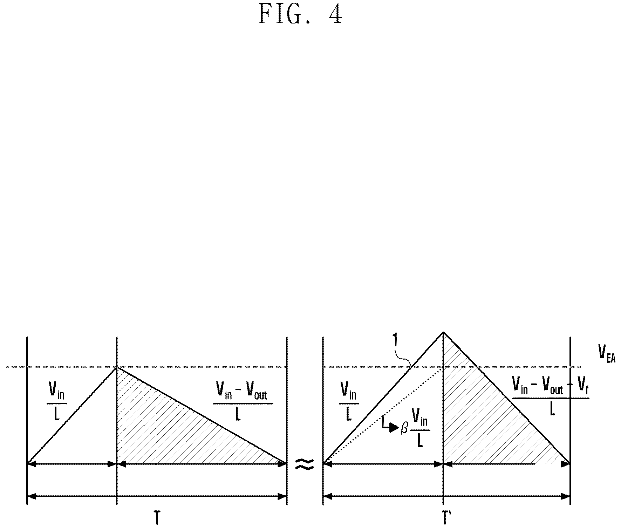

FIG. 4 is a diagram for describing a method for compensating for a current slope according to various embodiments.

Referring to FIG. 4, the current waveform of the inductor 211 in the synchronous mode and the current waveform of the inductor 211 to which the frequency compensation value in the asynchronous mode is applied are illustrated. When the frequency compensation value is applied, the area 31 of the discharge section and the area 32 of the asynchronous discharge section in the synchronous mode may be the same. As described above, the driver unit 210 is switched at the point where the error value and the current of the inductor 211 become equal, and the inductor 211 may be discharged. However, when a slope 1 of the inductor 211 changes abruptly in the asynchronous mode, the current of the inductor 211 may become equal to the error value earlier than appropriate timing, and the discharge may start. Therefore, the current slope compensation unit 223 may compensate for the slope 1 of the inductor 211 so that the inductor 211 may be discharged at appropriate timing. The slope 1 of the inductor 211 may be acquired by a height value of a triangle wave.

A control duty ratio in the synchronous mode is as follows:

$$D = 1-(Vin/Vout) = (Vout-Vin)/Vout$$

The control duty ratio in the asynchronous mode is as follows:

$$D' = 1-(Vin/(Vout+Vf)) = ((Vout+Vf-Vin)/(Vout+Vf))$$

Assuming that the current slope is identical when the mode is switched, it may be expressed as follows.

$$D*T*(Vin/L) = D'*T'*b*(Vin/L)$$

$$b = (D*T)/(D'*T') = ((Vout-Vin)/Vout) * ((Vout+Vf)/(Vout+Vf-Vin))*(1/a)$$

Here, b may be the slope compensation value.

Accordingly, the slope compensation value is a compensation value that compensates for a rising slope of the current of the inductor reaching the error value so that a period of the current of the inductor reaching the error value becomes equal to a rising period of the current of the inductor configured based on the second frequency and the second duty ratio in the asynchronous mode.

As described with reference to FIGS. 3 and 4, when a frequency compensation value a and a slope compensation value b are applied in the asynchronous mode, the discharge charge amount in the synchronous mode may be equal to the discharge charge amount in the asynchronous mode. Therefore, the undershooting and/or overshooting of the output voltage (or ripple) during the mode switching may be eliminated.

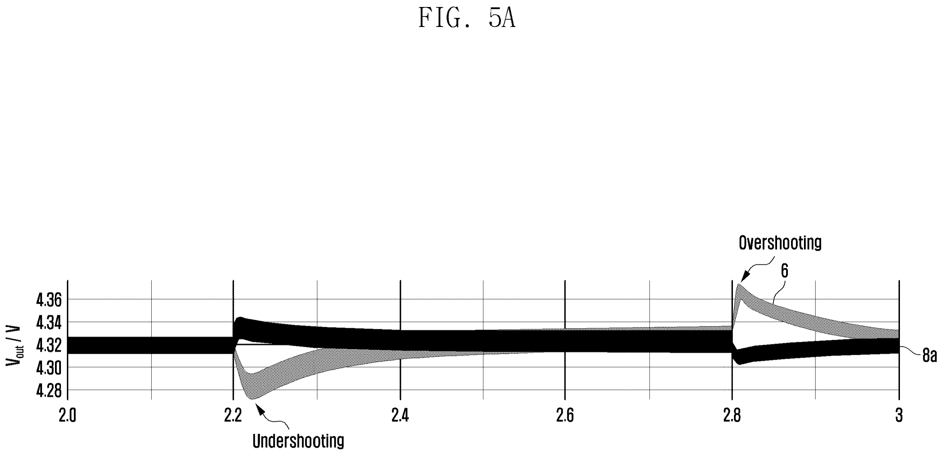

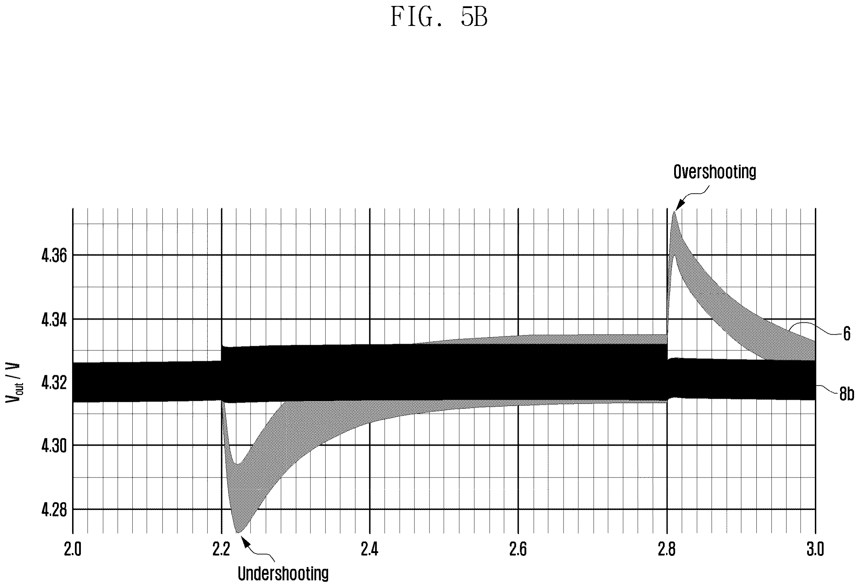

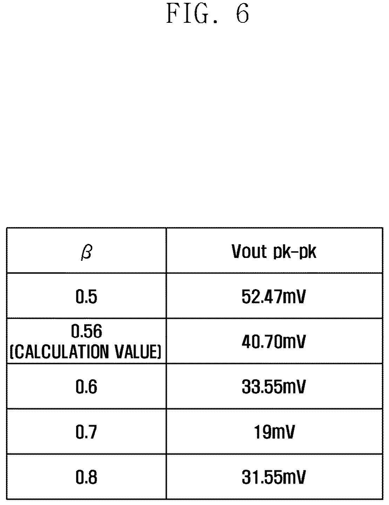

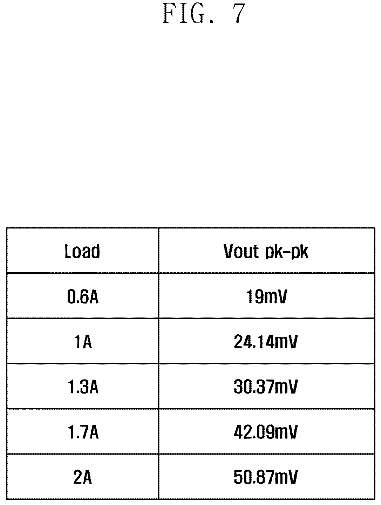

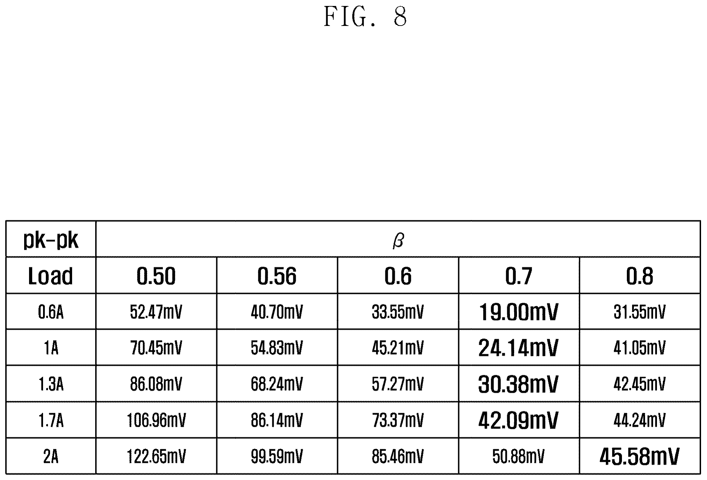

FIGS. 5A and 5B are diagrams illustrating output voltages according to various embodiments, FIG. 6 is a diagram illustrating the slope compensation value and the output voltage ripple according to various embodiments, FIG. 7 is a diagram illustrating the load condition and the output voltage ripple according to various embodiments, and FIG. 8 is a diagram illustrating the load condition, the slope compensation value, and the output voltage ripple according to various embodiments.

Referring to FIG. 5A, simulation results of an output voltage 6 to which the compensation value is not applied and an output voltage 8a to which the frequency compensation value a and the slope compensation value b are applied are illustrated. The output voltage to which the compensation value is not applied may experience the overshooting and undershooting when the mode is switched. As an embodiment, when Vin = 4 V, Vout = 4.3 V, and Vf = 0.7 V, the frequency compensation value a may be 0.65, and the slope compensation value b may be 0.56. When the frequency compensation value a and the slope compensation value b are applied under a load condition of 0.6A, the ripple is reduced by approximately 60% compared to the existing method, and the overshooting and undershooting may also be eliminated.

As an embodiment, FIG. 6 illustrates a table showing the relationship between the slope compensation value and the output voltage ripple when the load condition is 0.6A. The slope compensation value b may vary depending on the load condition, and there may be a difference between a theoretical compensation value and an optimal compensation value.

As an embodiment, when the slope compensation value is 0.7, FIG. 5B illustrates a graph of the output voltage, and FIG. 7 illustrates a table showing the relationship between the load condition and the output voltage ripple. Referring to FIG. 5B, graphs of the output voltage 6 to which the compensation value is not applied and an output voltage 8b to which the frequency compensation value a and the slope compensation value b are applied are illustrated. It may be seen that the output voltage ripple to which the optimal compensation value (e.g., slope compensation value of 0.7) is applied as illustrated in FIG. 5B is decreased compared to the output voltage ripple to which the theoretical compensation value (e.g., slope compensation value of 0.56) is applied as illustrated in FIG. 5A. In addition, the output voltage ripple may vary depending on the load condition.

As an embodiment, FIG. 8 illustrates a table showing the output voltage ripple according to the slope compensation value and the load condition. Referring to FIG. 8, when the load condition is less than 2A, the ripple is the smallest when the slope compensation value b is 0.7, but when the load condition is 2A, the ripple may be the smallest when the slope compensation value b is 0.8.

The current waveform of the inductor 211 may be affected by the load condition (or DC current). In addition, there may be the difference between the theoretical compensation value and the optimal compensation value due to various errors. Therefore, the frequency compensation value a and the slope compensation value b may be configured considering the effects of the load conditions. In addition, the compensation value may be configured (or modified) considering various errors.

The power supply device 200 may apply the frequency compensation value and the slope compensation value to eliminate the ripple and prevent the noise of the display during the mode switching.

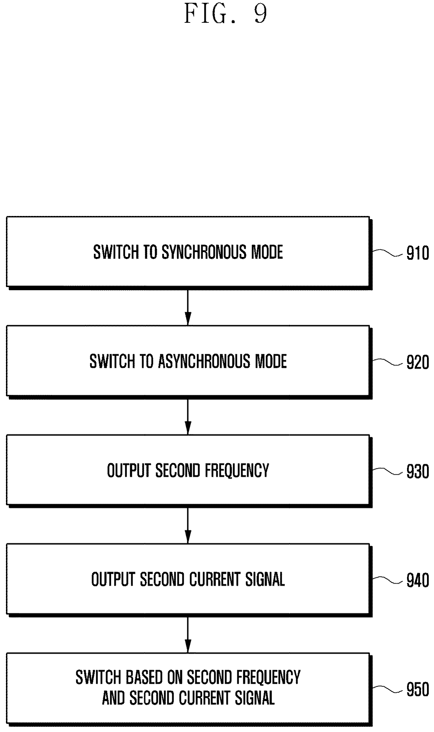

FIG. 9 is a flowchart for describing a control method of a power supply device according to various embodiments.

Referring to FIG. 9, the power supply device 200 may be switched to the synchronous mode (910). The power supply device 200 may be switched to the synchronous mode based on the first frequency configured according to the first duty ratio. For example, the first frequency may be the frequency provided by the clock unit 240. In the synchronous mode, the power supply device 200 may increase the current of the inductor 211 by alternately turning on/off the two switches which are the first switch 11 and the second switch 12, and then output the increased current. For example, the power supply device 200 may turn on the first switch 11 and turn off the second switch 12. While the first switch 11 is turned on and the second switch 12 is turned off, the current of the inductor 211 may be increased. The power supply device 200 may detect the current of the inductor 211. The power supply device 200 may compare the instantaneous output voltage with the target output voltage and output the error value. In addition, when the detected current of the inductor is greater than or equal to the error value, the power supply device 200 may turn off the first switch 11 and turn on the second switch 12.

When the preconfigured condition is satisfied, the power supply device 200 may be switched to the asynchronous mode (920). The preconfigured condition may be a condition where the input voltage is greater than or equal to than the preconfigured voltage.

When switched to the asynchronous mode, the power supply device 200 may output the configured second frequency (930). For example, the power supply device 200 may acquire the frequency compensation value, and the second frequency may be configured based on the first frequency and the acquired frequency compensation value. The frequency compensation value may be the compensation value for the frequency at which the discharge charge amount of the inductor in the synchronous mode becomes equal to the discharge charge amount of the inductor in the asynchronous mode.

The power supply device 200 may output the second current signal corresponding to the current of the inductor to which the slope compensation value is applied (940). For example, the slope compensation value may be the compensation value that compensates for the rising slope of the current of the inductor reaching the error value so that a period of the current of the inductor reaching the error value becomes equal to the rising period of the current of the inductor configured based on the second frequency and the second duty ratio in the asynchronous mode. In addition, the slope compensation value may be configured with further reference to the load condition.

The power supply device 200 may switch the first switch 11 based on the second frequency and second current signal (950). When the preconfigured condition is released, the power supply device 200 may switch the asynchronous mode to the synchronous mode. The power supply device 200 may prevent noise occurring in the display by eliminating (or decreasing) the output voltage ripple during the mode switching.

For example, the power supply device 200 may include the driver unit 210 including the inductor 211, the frequency compensation unit 230, and the control unit 220 including the current slope compensation unit 223. The control unit 220 may output the synchronous mode control signal for operating the driver unit 210 in the synchronous mode, based on the first frequency configured according to the first duty ratio. When the preconfigured condition is satisfied, the control unit 220 may output the asynchronous mode control signal for switching the synchronous mode to the asynchronous mode. When the synchronous mode is switched to the asynchronous mode, the frequency compensation unit 230 may output the second frequency to which the frequency compensation value is applied. The current slope compensation unit 223 may output the second current signal corresponding to the current of the inductor to which the slope compensation value configured based on the second frequency and the second duty ratio in the asynchronous mode is applied. The control unit 220 may switch the driver unit 210 based on the second frequency and the second current signal.

For example, the control unit 220 may output the synchronous mode control signal for switching the asynchronous mode to the synchronous mode when the preconfigured condition is released.

For example, the frequency compensation unit 230 may include the frequency compensation circuit 231 that outputs the second frequency and the multiplexer 232 that receives the first frequency and the second frequency. The multiplexer 232 may output the first frequency in the synchronous mode and output the second frequency in the asynchronous mode.

For example, the control unit 220 may further include the current signal output unit 221 that detects the current of the inductor and outputs the first current signal that is obtained by compensating for the signal corresponding to the detected current of the inductor, and the error output unit 222 that compares the instantaneous output voltage with the target output voltage to output the error value. The current slope compensation unit 223 may include the current compensation circuit 2231 that outputs the second current signal and the multiplexer 2232 that receives the first current signal and the second current signal. The multiplexer 2232 may output the first current signal in the synchronous mode and output the second current signal in the asynchronous mode.

For example, when the second current signal is greater than or equal to the error value in the asynchronous mode, the control unit 220 may turn off the switch 11 of the driver unit 210.

For example, the frequency compensation value is a compensation value for a frequency at which the discharge charge amount of the inductor in the synchronous mode becomes equal to the discharge charge amount of the inductor in the asynchronous mode, and the second frequency may be configured based on the first frequency and the frequency compensation value.

For example, the slope compensation value may be the compensation value that compensates for the rising slope of the current of the inductor reaching the error value so that a period of the current of the inductor reaching the error value becomes equal to the rising period of the current of the inductor configured based on the second frequency and the second duty ratio in the asynchronous mode.

For example, the slope compensation value may be configured with further reference to the load condition.

For example, the preconfigured condition may be that the input voltage is greater than or equal to the preconfigured voltage.

For example, the control method of the power supply device 200 may include switching to the synchronous mode based on the first frequency configured according to the first duty ratio. When the preconfigured condition is satisfied, the control method may include switching the synchronous mode to the asynchronous mode. When the synchronous mode is switched to the asynchronous mode, the control method may include outputting the second frequency to which the frequency compensation value is applied. The control method may include outputting the second current signal corresponding to the current of the inductor to which the slope compensation value configured based on the second frequency and the second duty ratio in the asynchronous mode is applied. The control method may include switching based on the second frequency and the second current signal.

For example, when the preconfigured condition is released, the control method may include switching the asynchronous mode to the synchronous mode.

For example, the control method may include comparing the instantaneous output voltage with the target output voltage to output the error value. When the second current signal is greater than or equal to the error value in the asynchronous mode, the control method may include switching the switches 11 and 12 of the driver unit 210 to turn off.

For example, the frequency compensation value may be the compensation value for the frequency at which the discharge charge amount of the inductor 211 in the synchronous mode becomes equal to the discharge charge amount of the inductor 211 in the asynchronous mode, and the second frequency may be configured based on the first frequency and the frequency compensation value.

For example, the slope compensation value may be the compensation value that compensates for the rising slope of the current of the inductor reaching the error value so that a period of the current of the inductor reaching the error value becomes equal to the rising period of the current of the inductor configured based on the second frequency and the second duty ratio in the asynchronous mode.

For example, the slope compensation value may be configured with further reference to the load condition.

For example, the preconfigured condition may be that the input voltage is greater than or equal to the preconfigured voltage.

It should be appreciated that various examples of the disclosure and the terms used therein are not intended to limit the technological features set forth herein to particular examples and include various changes, equivalents, or replacements for a corresponding example. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it denotes that the element may be coupled with the other element directly (e.g., wiredly), wirelessly, or via a third element.

As used in connection with various examples of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an example, the module may be implemented in a form of an application-specific integrated circuit (ASIC).

Various examples as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an example, a method according to various examples of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various examples, each component (e.g., a module or a program) of the above-described components may include a single entity or multiple entities, and some of the multiple entities may be separately disposed in different components. According to various examples, one or more of the above-described components may be omitted, or one or more other components may be added. Alternatively or additionally, a plurality of components (e.g., modules or programs) may be integrated into a single component. In such a case, according to various examples, the integrated component may still perform one or more functions of each of the plurality of components in the same or similar manner as they are performed by a corresponding one of the plurality of components before the integration. According to various examples, operations performed by the module, the program, or another component may be carried out sequentially, in parallel, repeatedly, or heuristically, or one or more of the operations may be executed in a different order or omitted, or one or more other operations may be added.

The effects of the present disclosure are not limited to the above-described effects, and other effects that are not mentioned may be obviously understood by those skilled in the art from the above description.

**Claims**

1.   A power supply device, comprising:

a driver unit (210) including an inductor (211);
a frequency compensation unit (230); and
a control unit (220) including a current slope compensation unit (223),
wherein the control unit (220) is configured to output a synchronous mode control signal for operating the driver unit (210) in a synchronous mode, based on a first frequency configured according to a first duty ratio, and
when a preconfigured condition is satisfied, output an asynchronous mode control signal for switching the synchronous mode to an asynchronous mode,
when the synchronous mode is switched to the asynchronous mode, the frequency compensation unit (230) is configured to output a second frequency to which a frequency compensation value is applied,
the current slope compensation unit (223) configured to output a second current signal corresponding to a current of the inductor to which a slope compensation value configured based on the second frequency and a second duty ratio in the asynchronous mode is applied, and
the control unit (220) configured to output a switching signal for switching the driver unit (210) based on the second frequency and the second current signal.

2.   The power supply device of claim 1, wherein the control unit (220) is configured to output the synchronous mode control signal for switching the asynchronous mode to the synchronous mode when the preconfigured condition is released.

3.   The power supply device of claim 1, wherein the frequency compensation unit (230) includes:

a frequency compensation circuit (231) configured to output the second frequency; and
a multiplexer (232) configured to receive the first frequency and the second frequency and output the first frequency in the synchronous mode and outputs the second frequency in the asynchronous mode.

4.   The power supply device of claim 1, wherein the control unit (220) further includes:

a current signal output unit (221) configured to detect the current of the inductor and output a first current signal obtained by compensating for a signal corresponding to the detected current of the inductor; and

an error output unit (222) configured to compare an instantaneous output voltage with a target output voltage to output an error value,

wherein, the current slope compensation unit (223) includes:

a current compensation circuit (2231) configured to output the second current signal; and

a multiplexer (2232) configured to receive the first current signal and the second current signal and output the first current signal in the synchronous mode and outputs the second current signal in the asynchronous mode.

5. The power supply device of claim 4, wherein when the second current signal is greater than or equal to the error value in the asynchronous mode, the control unit (220) is further configurd to output a switching signal for switching a switch (11) of the driver unit (210) to turn off.

6. The power supply device of claim 4, wherein the frequency compensation value is a compensation value for a frequency at which a discharge charge amount of the inductor (211) in the synchronous mode becomes equal to a discharge charge amount of the inductor (211) in the asynchronous mode, and the second frequency is configured based on the first frequency and the frequency compensation value.

7. The power supply device of claim 4, wherein the slope compensation value is a compensation value that compensates for a rising slope of the current of the inductor reaching the error value so that a period of the current of the inductor reaching the error balue becomes equal to a rising period of the current of the inductor configured based on the second frequency and the second duty ratio in the asynchronous mode.

8. The power supply device of claim 7, wherein the slope compensation value is configured with further reference to a load condition.

9. The power supply device of claim 1, wherein the preconfigured condition is that an input voltage is greater than or equal to a preconfigured voltage.

10. A control method of a power supply device, comprising:

switching to a synchronous mode based on a first frequency configured according to a first duty ratio;

when a preconfigured condition is satisfied, switching the synchronous mode to an asynchronous mode;

when the synchronous mode is switched to the asynchronous mode, outputting a second frequency to which a frequency compensation value is applied;

outputting a second current signal corresponding to a current of an inductor to which a slope compensation value configured based on the second frequency and a second duty ratio in the asynchronous mode is applied; and

switching based on the second frequency and the second current signal.

11. The control method of claim 10, further comprising:

when the preconfigured condition is released, switching the asynchronous mode to the synchronous mode;

12. The control method of claim 10, further comprising:

comparing an instantaneous output voltage with a target output voltage to output an error value; and

when the second current signal is greater than or equal to the error value in the asynchronous mode, switching switches (11, 12) of a driver unit (210) to turn off.

13. The control method of claim 10, wherein the frequency compensation value is a compensation value for a frequency at which a discharge charge amount of the inductor (211) in the synchronous mode becomes equal to a discharge charge amount of the inductor (211) in the asynchronous mode, and the second frequency is configured based on the first frequency and the frequency compensation value.

14. The control method of claim 10, wherein the slope compensation value is a compensation value that compensates for a rising slope of the current of the inductor reaching the error value so that a period of the current of the inductor reaching the error value becomes equal to a rising period of the current of the inductor configured based on the second frequency and the second duty ratio in the asynchronous mode.

15. The control method of claim 14, wherein the slope compensation value is configured with further reference to a load

condition.

# FIG. 1

## FIG. 2

FIG. 3

# FIG. 4

FIG. 5A

FIG. 5B

FIG. 6

| $\beta$ | Vout pk-pk |
|---|---|
| 0.5 | 52.47mV |
| 0.56 [CALCULATION VALUE] | 40.70mV |
| 0.6 | 33.55mV |
| 0.7 | 19mV |
| 0.8 | 31.55mV |

FIG. 7

| Load | Vout pk-pk |
|------|-----------|
| 0.6A | 19mV |
| 1A | 24.14mV |
| 1.3A | 30.37mV |
| 1.7A | 42.09mV |
| 2A | 50.87mV |

FIG. 8

| pk-pk | β | | | | |
|---|---|---|---|---|---|
| Load | 0.50 | 0.56 | 0.6 | 0.7 | 0.8 |
| 0.6A | 52.47mV | 40.70mV | 33.55mV | **19.00mV** | 31.55mV |
| 1A | 70.45mV | 54.83mV | 45.21mV | **24.14mV** | 41.05mV |
| 1.3A | 86.08mV | 68.24mV | 57.27mV | **30.38mV** | 42.45mV |
| 1.7A | 106.96mV | 86.14mV | 73.37mV | **42.09mV** | 44.24mV |
| 2A | 122.65mV | 99.59mV | 85.46mV | 50.88mV | **45.58mV** |

EP 4 693 863 A1

# FIG. 9

| | |
|---|---|
| SWITCH TO SYNCHRONOUS MODE | 910 |

↓

| | |
|---|---|
| SWITCH TO ASYNCHRONOUS MODE | 920 |

↓

| | |
|---|---|
| OUTPUT SECOND FREQUENCY | 930 |

↓

| | |
|---|---|
| OUTPUT SECOND CURRENT SIGNAL | 940 |

↓

| | |
|---|---|
| SWITCH BASED ON SECOND FREQUENCY AND SECOND CURRENT SIGNAL | 950 |

# INTERNATIONAL SEARCH REPORT

| International application No. |
|---|
| **PCT/KR2024/000261** |

**A. CLASSIFICATION OF SUBJECT MATTER**

H02M 3/155(2006.01)i; H02M 1/00(2007.01)i; H02M 1/08(2006.01)i; G09G 3/3208(2016.01)i

According to International Patent Classification (IPC) or to both national classification and IPC

**B. FIELDS SEARCHED**

Minimum documentation searched (classification system followed by classification symbols)

H02M 3/155(2006.01); G05F 1/10(2006.01); H02M 1/00(2007.01); H05B 37/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 스위칭(switching), 인덕터(inductor), 주파수(frequency), 멀티플렉서 (multiplexer), 슬로프 보상(slope compensation)

**C. DOCUMENTS CONSIDERED TO BE RELEVANT**

| Category* | Citation of document, with indication, where appropriate, of the relevant passages | Relevant to claim No. |
|---|---|---|
| A | KR 10-2018-0015592 A (ROHM CO., LTD.) 13 February 2018 (2018-02-13) See paragraphs [0023], [0030]-[0035], [0039]-[0042] and [0080]-[0090]; and figures 1 and 11. | 1-15 |
| A | KR 10-2010-0129789 A (RICOH CO., LTD.) 09 December 2010 (2010-12-09) See paragraphs [0030]-[0037]; and figure 2. | 1-15 |
| A | JP 2019-047692 A (ROHM CO., LTD.) 22 March 2019 (2019-03-22) See paragraphs [0075]-[0082]; and figures 5-6. | 1-15 |
| A | JP 2014-090035 A (ROHM CO., LTD.) 15 May 2014 (2014-05-15) See entire document. | 1-15 |
| A | KR 10-2009-0048638 A (RICOH CO., LTD.) 14 May 2009 (2009-05-14) See entire document. | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 April 2024** | **08 April 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/000261**

| Patent document cited in search report | | | Publication date (day/month/year) | Patent family member(s) | | | Publication date (day/month/year) |
|---|---|---|---|---|---|---|---|
| KR | 10-2018-0015592 | A | 13 February 2018 | JP | 2018-023215 | A | 08 February 2018 |
| | | | | JP | 6745672 | B2 | 26 August 2020 |
| | | | | US | 10110129 | B2 | 23 October 2018 |
| | | | | US | 2018-0041123 | A1 | 08 February 2018 |
| KR | 10-2010-0129789 | A | 09 December 2010 | CN | 102027662 | A | 20 April 2011 |
| | | | | CN | 102027662 | B | 24 July 2013 |
| | | | | EP | 2283569 | A1 | 16 February 2011 |
| | | | | JP | 2009-278719 | A | 26 November 2009 |
| | | | | JP | 5063474 | B2 | 31 October 2012 |
| | | | | US | 2011-0043175 | A1 | 24 February 2011 |
| | | | | US | 8624566 | B2 | 07 January 2014 |
| | | | | WO | 2009-139249 | A1 | 19 November 2009 |
| JP | 2019-047692 | A | 22 March 2019 | JP | 6936667 | B2 | 22 September 2021 |
| JP | 2014-090035 | A | 15 May 2014 | JP | 6146984 | B2 | 14 June 2017 |
| | | | | US | 2014-0125246 | A1 | 08 May 2014 |
| | | | | US | 8922138 | B2 | 30 December 2014 |
| KR | 10-2009-0048638 | A | 14 May 2009 | None | | | |

Form PCT/ISA/210 (patent family annex) (July 2022)